(19) **Europäisches Patentamt**
**European Patent Office**
**Office européen des brevets**

(11) **EP 2 195 763 B1**

(12) **EUROPEAN PATENT SPECIFICATION**

(45) Date of publication and mention
of the grant of the patent:
**28.12.2011 Bulletin 2011/52**

(51) Int Cl.:
*G06K 7/00* *(2006.01)*    *G01S 13/50* *(2006.01)*
*G01S 13/74* *(2006.01)*

(21) Application number: **08807660.9**

(22) Date of filing: **15.09.2008**

(86) International application number:
**PCT/IB2008/053730**

(87) International publication number:
**WO 2009/040699 (02.04.2009 Gazette 2009/14)**

(54) **A METHOD FOR CLASSIFYING A TRANSPONDER AND/OR SIGNALS ORIGINATING FROM A TRANSPONDER AND READER**

VERFAHREN ZUR KLASSIFIZIERUNG EINES TRANSPONDERS UND/ODER VON EINEM TRANSPONDER ABGEGEBENER SIGNALE UND LESEGERÄT

PROCÉDÉ DE CLASSEMENT D'UN TRANSPONDEUR ET/OU DE SIGNAUX PROVENANT D'UN TRANSPONDEUR ET LECTEUR

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.09.2007 EP 07117270**

(43) Date of publication of application:
**16.06.2010 Bulletin 2010/24**

(73) Proprietor: **NXP B.V.**
**5656 AG Eindhoven (NL)**

(72) Inventor: **MUEHLMANN, Ulrich**
**A-1102 Vienna (AT)**

(74) Representative: **Krott, Michel**
**NXP Semiconductors B.V.**
**IP & Licensing Department**
**High Tech Campus 32**
**5656 AE Eindhoven (NL)**

(56) References cited:
**EP-A- 0 853 245**    **US-A- 5 227 803**
**US-A- 5 777 561**

**Description**

FIELD OF THE INVENTION

The invention relates to a method for classifying a transponder and/or signals originating from a transponder and to a reader.

BACKGROUND OF THE INVENTION

Transponders, which are also referred to as tags or labels, are well known in the art and are designed to communicate with a reader which is also known as a base station. Usually, the reader sends a signal to the transponder. If the transponder is close enough to the reader, then the transponder receives this signal and may send, in response to the received signal, a response signal to the reader.

In some applications, a plurality of goods each carrying a transponder is transported as a whole, for instance, on a pallet. When passing a certain point, for instance, a door or a gate, a reader may detect the transponders. In this scenario, it is desired that the reader or a further device only processes signals received from the transponders of the plurality of goods. Particularly, if the range, within the reader can communicate with transponders, is relatively wide, then it may happen that the reader receives a response from a transponder not associated with the plurality of goods. Such transponder reader systems are, for instance, ultra high frequency (UHF) RFID transponder reader systems.

EP 0 853 245 (A2) discloses a radio communication system which includes an interrogator for generating and transmitting a radio signal. One or more tags contained within the radio communication system receive the radio signal. A backscatter modulator modulates the reflection of the radio signal using a subcarrier signal, thereby forming a reflected modulated signal. The interrogator receives and demodulates the reflected modulated signal. Based upon the characteristics of the demodulated signal, the interrogator can determine the identity of the tag, and the relative velocity of the tag with respect to the interrogator.

US 5,227,803 discloses a transponder location and tracking system having a phased array antenna mounted at a toll collection station which includes a plurality of antenna array elements for receiving a signal from a transponder mounted on a vehicle and for providing a plurality of antenna element electrical signals. The phase shift at each element of the array allows the direction and hence the position of the transponder to be determined. Subsequent response signals from the transponder allow its position to be tracked and its velocity to be determined.

OBJECT AND SUMMARY OF THE INVENTION

It is an object of the present invention to provide a method which allows to differentiate between signals originating from transponders associated with the plurality of goods and signals originating from further transponders.

Another object of the present invention is to provide a reader which is capable of differentiating between signals originating from transponders associated with the plurality of goods and signals originating from further transponders.

The object is achieved in accordance with the invention by means of a method for classifying a transponder and/or signals originating from a transponder as defined in claim 1.

The inventive method is particularly beneficial when discriminating transponders which are moved with a plurality of goods from other transponders in a relatively short time and in particular by means of a ultra high frequency (UHF) transponder reader system with long radio range. As the transponders associated with the moving goods (e.g. on a pallet) have all the same velocity, determination of the velocity of a transponder can be used as a property to identify transponders moved with the goods. In response to the identification based on the determined velocity, the related transponder and/or signals originating from this transponder can be classified as valid or invalid. Then, for instance, only signals originating from a valid transponder may be used for further processing. As a result, the determined velocity can be used to cluster all the transponders having the same velocity to one group and specify it as a valid group of goods detected. Signals from transponders having different velocities, for instance, originating from unwanted reads from adjacent doors or pallets standing nearby, can be clustered to another group and are specified as an invalid group of goods in, for instance, a registration (inventory) process.

In one embodiment, the inventive method comprises classifying the transponder and/or signals originating from the transponder as valid if the determined velocity is above a first reference velocity and/or below a second reference velocity which is greater than the first reference velocity. The transponders to be detected are moving with a certain velocity. Classifying transponders and/or signals originating from the transponders as valid if the transponders move above the first reference velocity particularly allows to reject non-moving transponders, i.e. particularly allows classifying non-moving transponders and/or their signals as invalid. The first reference velocity is preferably chosen in order to reliably detecting transponders moving with the certain velocity.

Generally, the velocity of the transponder can be determined with arbitrary means. Preferably, the velocity is determined using signals sent by the transponder.

Thus, in a further aspect of the invention, a reader comprises the features defined by claim 5.

The first signal sent from the reader may particularly be a query signal used to search for transponders. If the transponder is within the radio range of the reader, it receives the first signal and generates the first response signal. The first response signal may include a random number generated by and assigned to the transponder. In response to the received first response signal, the reader generates and sends the second signal which may be an acknowledge signal. In response to the second signal, the transponder generates and sends the second response signal which may, for instance, include an electronic product code (EPC) of its associated product and also a cyclic redundancy checksum that may relate to the random number. The time interval between receiving the two response signals and analyzing the two response signals can be used to determine the velocity of the transponder. The first and second response signals may be demodulated at the reader utilizing a quadrature amplitude modulated scheme so that each de-modulated first and second response signal comprises first and second components being orthogonal to each other. Then determining the velocity may include estimating the phase-shift between the two response signals and the time interval between receiving the first and second response signals.

The first and second response signals may be quadrature amplitude modulated signals each having the first and second components being orthogonal to each other. This, however, is not necessary. The transponder may also send the receiving signals utilizing, for instance, an ASK or a PSK/BPSK modulation scheme.

The phase-shift or angle, $\varphi$, between the two response signals can, for instance, be estimated as following:

$$\varphi = \arctan 2(S_Q(t_2), S_I(t_2)) - \arctan 2(S_Q(t_1), S_I(t_1))$$

wherein $S_I(t_1)$ is the first component of the first response signal, $S_Q(t_1)$ is the second component of the first response signal, $S_I(t_2)$ is the first component of the second response signal, $S_Q(t_2)$ is the second component of the second response signal, and arctan2 is the four quadrant inverse tangent function of the parts of the elements of $S_Q$ and $S_I$.

Then, the velocity, $v$, of the transponder may be estimated according to the following equation:

$$v = \frac{v_p}{2\omega} \frac{\arctan 2(\frac{S_Q(t_2)}{S_I(t_2)}) - \arctan 2(\frac{S_Q(t_1)}{S_I(t_1)})}{t_2 - t_1}$$

wherein $\omega$ is the angular carrier frequency of a carrier signal for the first and second response signals, $v_p$ is the propagation velocity of the carrier signal, and $t_2 - t_1$ is the time interval between receiving the first and second response signals.

In order to improve the estimation of the velocity, at least one of the first or second components of the first or second response signals may be averaged over time.

Quadrature amplitude modulation, usually abbreviated as QAM, is known in the art *per se* and is a modulation scheme which conveys data by modulating the amplitude of two carrier waves. The two carrier waves are phase-shifted with respect to each other by 90° and have the same angular carrier frequency $\omega$. Usually, the flow of bits to be transmitted is split into two parts, resulting in the generation of two independent signals to be transmitted (channels). The two independent signals are encoded separately utilizing, for instance, amplitude shift keying (ASK) or phase shift keying (PSK) modulation. One of the encoded signals is modulated by a cosine ("in-phase channel" or "I-channel") and the other encoded signal is modulated by a sine ("quadrature channel" or "Q-channel"). Then, the two signals are added one to the other and sent through a real channel.

When utilizing a zero intermediate frequency de-modulation scheme, particularly a zero intermediate quadrature amplitude modulation scheme, then the first and second components can be described using the following equations, if the first component is "in-phase" and the second component of the second component is "quadrature":

$$S_I = \cos\left(\frac{2\omega d}{v_p}\right) \cos\left(\omega_m t - \phi_1 - \frac{\omega_m d}{v_p}\right)$$

$$S_Q = \sin\left(\frac{2\omega d}{v_p}\right)\cos\left(\omega_m t - \phi_1 - \frac{\omega_m d}{v_p}\right)$$

wherein $d$ is the distance form the reader to the transponder, $\omega_m$ is the angular modulation frequency of the fundamental wave (link), $\phi_l$ is the unknown phase shift with respect to the carrier signal, and $vp$ is the propagation velocity in the related medium. The related medium is usually air. The first terms of the two components $S_l$, $S_Q$ are time independent and can be treated as an additional amplitude modulation dependent on distance and wave-length. The perpendicular nature of the orthogonal IQ-channels prevents the cancellation of the base-band information in all conditions of distance and wavelength.

The additional amplitude modulation can be useful for target tracking and target velocity estimation and can help to estimate the material properties, because different materials in which the medium propagates cause different propagation velocities. Furthermore, two or more synchronized readers or one reader with specially distributed receiving antennas can be utilized for triangulation in order to achieve better localization conditions.

Since the reader knows the time instances when it receives the two response signals, the velocity, $v$, of the transponder can be estimated as:

$$v = \frac{\Delta d}{\Delta t} = \frac{v_p}{2\omega}\frac{\arctan 2(\frac{S_Q(t_2)}{S_I(t_2)}) - \arctan 2(\frac{S_Q(t_1)}{S_I(t_1)})}{t_2 - t_1}$$

$\Delta d$ is the distance the transponder has moved between receiving the two response signals.

The signals $S_I$ and $S_Q$ may be averaged to eliminate the time dependent components.

Since $\cos\left(2\frac{\omega \cdot d}{v_p}\right)$ is circular with $2\pi$, the maximum allowed velocity of

the transponder may be calculated. If using, for instance, an ultra high frequency (UHF) reader transponder system operating in accordance with the EPCglobal UHF Protocol Standard, then the system may currently operate in the range of 1GHz. The time between receiving the two response signals in the case of the random number assigned to the transponder is currently in the range of 2 ms. Thus, the maximum velocity, $v_{max}$, of the transponder and assuming the propagation medium is air, is approximately:

$$\frac{2\omega\Delta d}{v_p} \approx 2\pi \rightarrow v_{max} \approx \frac{\Delta d}{\Delta t} = \frac{1}{\Delta t}\frac{2\pi v_p}{2\omega} = 75 m/s$$

The inventive method and the inventive reader can particularly be used, utilizing the transportation velocity of tags or transponders, as a distinctive feature for classification and detection of tags belonging to a group which is moved with the same velocity. Furthermore, the classification may be used to separate valid reads and invalid (unwanted) reads of the transponders.

BRIEF DESCRIPTION OF THE DRAWINGS

The invention will be described in greater detail hereinafter, by way of non-limiting examples, with reference to the embodiments shown in the drawings.

Fig. 1 is an RFID reader transponder system,

Fig. 2 is a circuit diagram of a part of the reader of Fig. 1, and

Fig. 3 illustrates signals received by the reader.

## DETAILED DESCRIPTION OF EMBODIMENTS

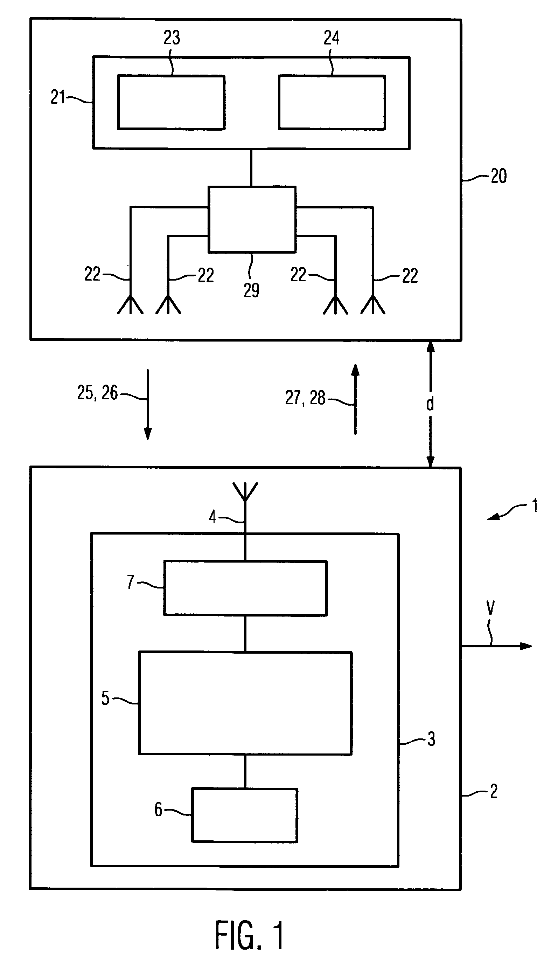

Fig. 1 shows an RFID transponder reader system. For the exemplary embodiment, the transponder reader system operates in accordance with the EPCglobal UHF Protocol Standard and can communicate with each other based on zero intermediate frequency and quadrature amplitude de-modulation (QAM).

For the exemplary embodiment, the transponder 1 is placed apart from the reader 20 at a distance $d$, is attached on a product not explicitly shown in the figures and is moving with the product at a velocity $v$. The transponder 1 comprises a substrate 2, an electric circuit which is an integrated circuit 3 for the exemplary embodiment, and an antenna 4. The integrated circuit 3 and the antenna 4 are attached to the substrate 2.

The transponder 1 is configured to receive signals sent by the reader 20 and to generate and send response signals in response to the signals of the reader 20. The response signals are ASK, PSK, BPSK or QAM signals in this embodiment and may have two components being orthogonal to each other in QAM and one component in ASK, PSK, and BPSK. Each component is modulated utilizing an ASK modulation scheme. The generation of the response signals is known *per se* in the art and is thus not explained in detail. In order to generate the response signals, the integrated circuit 3 of the transponder 1 may, for instance, comprise a memory 6 which stores the content of the response signal, and a micro-controller 5 connected to the memory 6 to generate the response signals.

For the exemplary embodiment, signals of the reader 20 are transmitted utilizing an UHF electro-magnetic field, as it is known *per se* in the art. The integrated circuit 3 further comprises a decoder/ encoder stage 7 which is connected to the micro-controller 5 and to the antenna 4. The decoder/ encoder stage 7 is configured to process the output signals of the antenna 4 in order to decode the reader signals from the electro-magnetic field. The decoded signals are then transferred to the micro-controller 5 for further processing. A clock signal needed for processing of the decoded signals is derived from the electro-magnetic field.

For the exemplary embodiment, the transponder 1 is a passive transponder whose integrated circuit 3 is powered by the electro-magnetic field emitted by the reader 20. However, the transponder 1 can also be an active transponder.

In this embodiment, the reader 20 comprises antennas 22, an electric circuit 21 which comprises a sender 23 and a receiver 24, and a multiplexer 29 to select an appropriate antenna of the antennas 22 when being in its sending or receiving mode. The sender 23 is configured to generate signals, in particular first and second signals 25, 26 directed to the transponder 1.

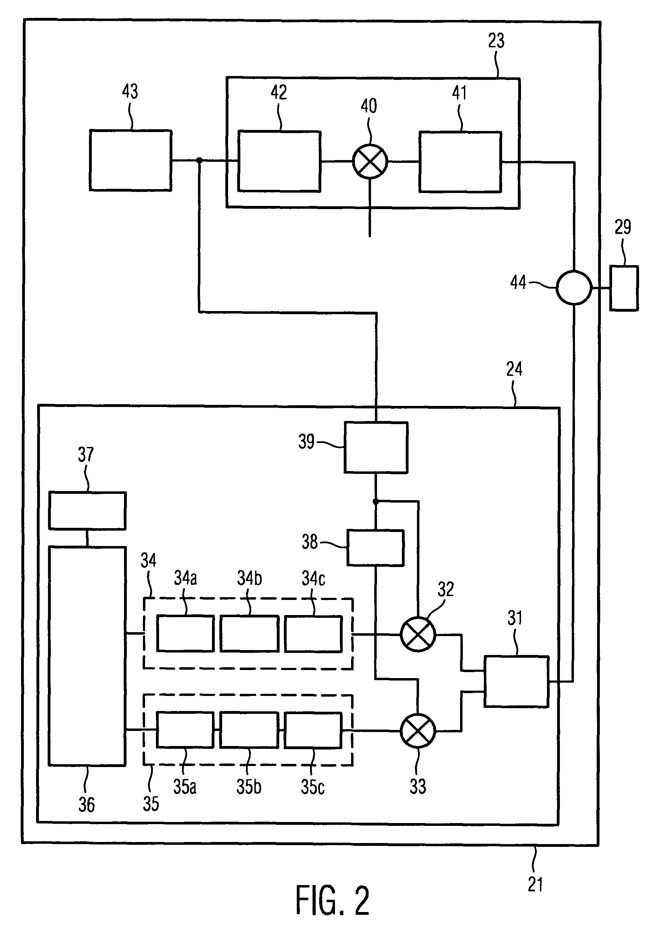

Fig. 2 shows the electric circuit 21 of the reader 20 more detailed.

For the exemplary embodiment, the electric circuit 21 comprises, besides the sender 23 and the receiver 24, a cosine wave signal generator 43 which generates a signal used as the power carrier for the electro-magnetic wave and having a carrier frequency, $f$, of 915 MHz, and a circulator 44. A circulator is a directional isolator and directional router dependent on the direction of outgoing and incoming signals at its individual ports. The signal generator 43 may be tunable and is connected to the sender 23 and to the receiver 24. The circulator 44 is connected to the outputs of the sender 23 and the receiver 24 and is also connected to the multiplexer 29. A multiplexer 29 is a device that switches the antennas 22 alternatively between the sender 23 and the receiver 24. The carrier frequency, $f$, may be fixed or variable and is not restricted to 915 MHz.

In this embodiment, the sender 23 comprises a buffer 42, a mixer 40 and a power amplifier 41. The buffer 42 is connected to the signal generator 43 and to the mixer 40. The mixer 40 modulates data on the carrier signal generated by the signal generator 43. The modulated signal is passed to the power amplifier 41 which is connected to the circulator 44. The output signal of the power amplifier 41 is transmitted by the antennas 22 to the transponder 1. For the exemplary embodiment, the modulation scheme used for the sender 23 is ASK or PR-ASK.

For the exemplary embodiment, the receiver 24 comprises a splitter 31, first and second mixers 32, 33, first and second image rejection filters 34, 35, a buffer 39, a phase-shifter 38, a microprocessor 36, and a memory 37 connected to the microprocessor 36. The image rejection filters 34, 35 are essentially identical and comprise each electro-magnetic interference (EMI) low-pass filters 34c, 35c, highpass filters 34b, 35b, and programmable fifth order low-pass filters 34a, 35a. The buffer 39 is connected to the signal generator 43 and the phase-shifter 38 phase-shifts an input signal by 90°.

When the reader 20 receives an ASK, PSK, BPSK or QAM signal, then this signal is captured by the antenna 22 and fed via the circulator 44 to the splitter 31. The splitter 31 basically splits this signal into two identical signals. One of the split signals is fed to the first mixer 32 and the other split signal is fed to the second mixer 33. The first mixer 32 is connected to the signal generator 43 via the buffer 39. The second mixer 33 is connected to the phase-shifter 38 which is connected to the signal generator 43 via the buffer 39. Therefore, the input signals for the first mixer 32 are signals received by the reader 20 and a cosine signal having the angular carrier frequency, $\omega$, and the input signals to the second mixer 33 are signals received by the reader 20 and a sine signal having the angular carrier frequency, $\omega$. The output signals of the mixers 32, 33 are thus orthogonal to each other and are passed through the image rejection filters 34, 35 and processed by the microprocessor 36. The receiver 24 does not utilize any intermediate frequency for the exemplary embodiment.

When initiating a communication, the reader 20 generates and sends the first signal 25 which is a query signal for the exemplary embodiment. In response to the first signals 25, the transponder 1 generates a first response signal 27 utilizing backscattering as it is known *per se* in the art and sends it to the reader 20. The first response signal 27 is an ASK, PSK, BPSK or QAM signal which is based on zero intermediate frequency. The first response signal 27 may comprises a random number generated by and assigned to the transponder 1.

When the reader 20 receives the first response signal 27, it records the present time, $t_1$, demodulates the first response signal utilizing its mixers 32, 33, and generates and sends the second signal 26 which is an acknowledge signed for the exemplary embodiment.

Upon receiving the second signal 26, the transponder 1 demodulates and processes the second signal 26, and generates and sends a second response signal 28. For the exemplary embodiment, the second response signal 28 includes an electronic product code (EPC) of its associated product and also a cyclic redundancy checksum related to the random number.

When the reader 20 receives the second response signal 28, it records the present time, $t_2$, demodulates the second response signal utilizing its mixers 32, 33, and processes the information of the second response signal 28.

Since for the exemplary embodiment a zero intermediate frequency quadrature amplitude de-modulation scheme is used, the de-modulated first and second response signals 27, 28 have each two components $S_I$, $S_Q$, which can be described using the following equations, if the first component $S_I$ is "in-phase" and the second component $S_Q$ is "quadrature":

$$S_I = \cos\left(\frac{2\omega d}{v_p}\right)\cos\left(\omega_m t - \phi_1 - \frac{\omega_m d}{v_p}\right)$$

$$S_Q = \sin\left(\frac{2\omega d}{v_p}\right)\cos\left(\omega_m t - \phi_1 - \frac{\omega_m d}{v_p}\right)$$

wherein $d$ is the distance form the reader 20 to the transponder 1, $\omega_m$ is the modulation angular frequency of the fundamental wave (link), $\phi_I$ is the unknown phase shift with respect to the carrier signal having the angular frequency $\omega$, and $v_p$ is the propagation velocity in the related medium which is air for the exemplary embodiment.

Since the transponder 1 is moving with the velocity $v$, the phase shift with respect to the carrier signal differs for the first and second response signals 27, 28. In order to determine the velocity $v$ of the transponder 1, its velocity $v$ is estimated according to the following equation:

$$v = \frac{v_p}{2\omega}\frac{\arctan 2(\frac{S_Q(t_2)}{S_I(t_2)}) - \arctan 2(\frac{S_Q(t_1)}{S_I(t_1)})}{t_2 - t_1}.$$

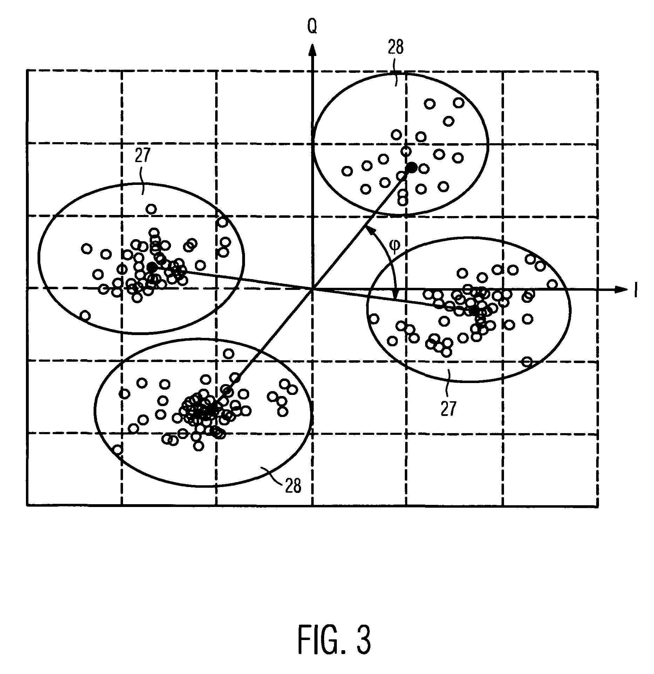

Fig. 3 illustrates the two response signals 27, 28 in the IQ-plane. Effects of amplitude variations of the response signals 27, 28 can be reduced by averaging the signals for estimation of the transponder 1 velocity $v$. The difference of the phase shifts with respect to the carrier signal for the first and second response signals 27, 28 is illustrated by an angle (phase-shift) $\varphi$. The angle $\varphi$ can be estimated as:

$$\varphi = \arctan 2(\frac{S_Q(t_2)}{S_I(t_2)}) - \arctan 2(\frac{S_Q(t_1)}{S_I(t_1)})$$

For the exemplary embodiment, the microprocessor 36 compares the determined velocity *v* of the transponder 1 with a reference velocity and classifies the second response signal 28 only as valid, if the estimated velocity *v* of the transponder 1 is greater than the reference velocity. Otherwise, the microprocessor 36 classifies the second response signal 28 as invalid.

For the exemplary embodiment, the time instances $t_1$, $t_2$ at which the reader 20 receives the two response signals 27, 28 are stored, for instance, in the memory 37. Alternatively, it is possible to only determine the difference between these two time instances by, for instance, starting a counter at the time instance $t_1$.

Finally, it should be noted that the aforementioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprise" and its conjugations do not exclude the presence of elements or steps other than those listed in any claim or the specification as a whole. The singular reference of an element does not exclude the plural reference of such elements. In a device claim enumerating several means, several of these means may be embodied by one and the same item of software or hardware. The mere fact that certain measures are recited in mutually different dependent claims does not indicate that a combination of these measures cannot be used to advantage.

**Claims**

1.   A method for classifying a transponder and/or signals originating from a transponder, comprising the steps of:

   sending from a reader (20) a first signal (25) to the transponder (1);
   receiving at the reader (20) in response to the first signal (25) a first response signal (27) emitted by the transponder (1);
   sending from the reader (20) a second signal (26) to the transponder (1) in response to the first response signal (27);
   receiving at the reader (20) in response to the second signal (26) a second response signal (28) emitted by the transponder (1);
   de-modulating the first and second response signals (27, 28) at the reader (20) utilizing a quadrature amplitude modulated scheme so that each de-modulated first and second response signal comprises first and second components being orthogonal to each other, and
   determining the velocity (*v*) with which the transponder (1) is moving;
   the method being **characterized in that** the step of determining the velocity (v) includes estimating the phase-shift (φ) between the two response signals (27, 28) and the time interval between receiving the first and second response signals (27, 28);

   and **in that** the method further comprises the step of:

   classifying the transponder (1) and/or signals (28) originating from the transponder (1) as valid or invalid in response to the determined velocity (*v*).

2.   The method of claim 1, wherein the step of classifying comprises:

   classifying the transponder (1) and/or signals (28) originating from the transponder (1) as valid if the velocity (*v*) of the transponder (1) is above a first reference velocity and/or below a second reference velocity which is greater than the first reference velocity.

3.   The method of claim 1, comprising determining the velocity (*v*) of the transponder (1) according to the following equation:

$$v = \frac{v_p}{2\omega} \frac{\arctan 2(\frac{S_Q(t_2)}{S_I(t_2)}) - \arctan 2(\frac{S_Q(t_1)}{S_I(t_1)})}{t_2 - t_1}$$

wherein $v$ is the velocity ($v$) of the transponder (1), $\omega$ is the angular carrier frequency of a carrier signal for the first and second response signals (27, 28), $vp$ is the propagation velocity of the carrier signal, $t_2$ - $t_1$ is the time interval between receiving the first and second response signals (27, 28), $S_I(t_1)$ is the first component of the first response signal (27), $S_Q(t_1)$ is the second component of the first response signal (27), $S_I(t_2)$ is the first component of the second response signal (28), and $S_Q(t_2)$ is the second component of the second response signal (28).

4. The method of claim 1, wherein at least one of the first or second components of the first or second response signals (27, 28) is averaged over time, and/or the modulation of the first and second response signals (27, 28) are based on zero intermediate frequency.

5. A reader, comprising:

a sender (23) configured to generate and send first and second signals (25, 26) to a transponder (1), and a receiver (24) configured to receive a first response signal (27) from the transponder (1) in response to the first signal (25) and to receive a second response signal (28) from the transponder (1) in response to the second signal (26), wherein the reader (20) is configured to determine the velocity ($v$) of the transponder (1), and wherein the reader (20) is configured to de-modulate the first and second response signals (27, 28) utilizing a quadrature amplitude modulated scheme so that each de-modulated first and second response signal comprises first and second components being orthogonal to each other,

**characterized in that** the reader (20) is configured to determine the velocity ($v$) of the transponder by estimating the phase-shift ($\varphi$) between the two response signals (27, 28) and the time interval between the received first and second response signals (27, 28).

6. The reader of claim 5, further configured to determine the velocity ($v$) of the transponder (1) according to the following equation:

$$v = \frac{v_p}{2\omega} \frac{\arctan 2(\frac{S_Q(t_2)}{S_I(t_2)}) - \arctan 2(\frac{S_Q(t_1)}{S_I(t_1)})}{t_2 - t_1}$$

wherein $v$ is the velocity ($v$) of the transponder (1), $\omega$ is the angular carrier frequency of a carrier signal for the first and second response signals (27, 28), $v_p$ is the propagation velocity of the carrier signal, $t_2$ - $t_1$ is the time interval between receiving the first and second response signals (27, 28), $S_I(t_1)$ is the first component of the first response signal (27), $S_Q(t_1)$ is the second component of the first response signal (27), $S_I(t_2)$ is the first component of the second response signal (28), and $S_Q(t_2)$ is the second component of the second response signal (28).

7. The reader of claim 5, further configured to average at least one of the first or second components of the first or second response signals (27, 28) and/or wherein the first and second response signals (27, 28) are modulated on the carrier signal based on zero intermediate frequency.

**Patentansprüche**

1. Ein Verfahren zum Klassifizieren eines Transponders und/oder von Signalen, die von einem Transponder herstammen, wobei das Verfahren die Schritte aufweist:

Senden eines ersten Signals (25) von einem Leser (20) zu dem Transponder (1);

Empfangen eines ersten Antwortsignals (27), das durch den Transponder (1) ausgegeben wird, an dem Leser (20) in Antwort auf das erste Signal (25);

Senden eines zweiten Signals (26) von dem Leser (20) zu dem Transponder (1) in Antwort auf das erste Antwortsignal (27);

Empfangen eines zweiten Antwortsignals (28), das durch den Transponder (1) ausgegeben wird, an dem Leser (20) in Antwort auf das zweite Signal (26);

Demodulieren des ersten und des zweiten Antwortsignals (27, 28) an dem Leser (20), wobei ein quadraturamplitudenmoduliertes Schema verwendet wird, so dass jedes demodulierte erste und zweite Antwortsignal erste und zweite Komponenten aufweist, die orthogonal zueinander sind, und

Bestimmen der Geschwindigkeit (v), mit der sich der Transponder (1) bewegt;

wobei das Verfahren **dadurch gekennzeichnet ist, dass** der Schritt des Bestimmens der Geschwindigkeit (v) das Abschätzen der Phasenverschiebung ($\varphi$) zwischen den zwei Antwortsignalen (27, 28) und des Zeitintervalls zwischen dem Empfangen des ersten und des zweiten Antwortsignals (27, 28) aufweist;

und dadurch, dass das Verfahren des Weiteren den Schritt aufweist:

Klassifizieren des Transponders (1) und/oder von Signalen (28), die von dem Transponder (1) herstammen, als gültig oder ungültig in Antwort auf die bestimmte Geschwindigkeit (v).

2. Das Verfahren gemäß Anspruch 1, wobei der Schritt des Klassifizierens aufweist:

Klassifizieren des Transponders (1) und/oder der Signale (28), die von dem Transponder (1) herstammen, als gültig, wenn die Geschwindigkeit (v) des Transponders (1) über einer ersten Referenzgeschwindigkeit und/oder unter einer zweiten Referenzgeschwindigkeit ist, die größer als die erste Referenzgeschwindigkeit ist.

3. Das Verfahren gemäß Anspruch 1, wobei das Verfahren weiterhin aufweist das Bestimmen der Geschwindigkeit (v) des Transponders (1) gemäß der folgenden Gleichung:

$$v = \frac{v_p}{2\omega} \frac{\arctan 2\left(\frac{S_Q(t_2)}{S_I(t_2)}\right) - \arctan 2\left(\frac{S_Q(t_1)}{S_I(t_1)}\right)}{t_2 - t_1}$$

wobei $v$ die Geschwindigkeit (v) des Transponders (1) ist, $\omega$ die Winkelträgerfrequenz eines Trägersignals für das erste und das zweite Antwortsignal (27, 28) ist, $v_p$ die Ausbreitungsgeschwindigkeit des Trägersignals ist, $t_2 - t_1$ das Zeitintervall zwischen dem Empfangen des ersten und des zweiten Antwortsignals (27, 28) ist, $S_I(t_1)$ die erste Komponente des ersten Antwortsignals (27) ist, $S_Q(t_1)$ die zweite Komponente des ersten Antwortsignals (27) ist, $S_I(t_2)$ die erste Komponente des zweiten Antwortsignals (28) ist, und $S_Q(t_2)$ die zweite Komponente des zweiten Antwortsignals (28) ist.

4. Das Verfahren gemäß Anspruch 1, wobei zumindest eine von den ersten oder den zweiten Komponenten des ersten oder des zweiten Antwortsignals (27, 28) über die Zeit gemittelt ist, und/oder die Modulation von dem ersten und dem zweiten Antwortsignal (27, 28) auf einer Null-Zwischenfrequenz basiert.

5. Ein Leser, wobei der Leser aufweist:

einen Sender (23), der gestaltet ist, um ein erstes und ein zweites Signal (25, 26) zu erzeugen und zu einem Transponder (1) zu senden, und einen Empfänger (24), der gestaltet ist, um ein erstes Antwortsignal (27) von dem Transponder (1) in Antwort auf das erste Signal (25) zu empfangen und ein zweites Antwortsignal (28) von dem Transponder (1) in Antwort auf das zweite Signal (26) zu empfangen, wobei der Leser (20) gestaltet ist, um die Geschwindigkeit (v) des Transponders (1) zu bestimmen, und wobei der Leser (20) gestaltet ist, um das erste und das zweite Antwortsignal (27, 28) zu demodulieren, wobei ein quadraturamplitudenmodulierendes Schema verwendet wird, so dass jedes demodulierte erste und zweite Antwortsignal erste und zweite Komponenten aufweist, die orthogonal zueinander sind,

**dadurch gekennzeichnet, dass** der Leser (20) gestaltet ist, um die Geschwindigkeit (v) des Transponders zu bestimmen, indem die Phasenverschiebung (φ) zwischen den zwei Antwortsignalen (27, 28) und das Zeitintervall zwischen dem empfangenen ersten und zweiten Antwortsignal (27, 28) abgeschätzt wird.

**6.** Der Leser gemäß Anspruch 5, wobei der Leser weiterhin gestaltet ist, um die Geschwindigkeit (v) des Transponders (1) gemäß der folgenden Gleichung zu bestimmen:

$$v = \frac{v_p}{2\omega} \frac{\arctan 2(\frac{S_Q(t_2)}{S_I(t_2)}) - \arctan 2(\frac{S_Q(t_1)}{S_I(t_1)})}{t_2 - t_1}$$

wobei *v* die Geschwindigkeit (*v*) des Transponders (1) ist, ω die Winkelträgerfrequenz eines Trägersignals für das erste und das zweite Antwortsignal (27, 28) ist, $v_p$ die Ausbreitungsgeschwindigkeit des Trägersignals ist, $t_2$-$t_1$ das Zeitintervall zwischen dem Empfangen des ersten und des zweiten Antwortsignals (27, 28) ist, $S_I(t_1)$ die erste Komponente des ersten Antwortsignals (27) ist, $S_Q(t_1)$ die zweite Komponente des ersten Antwortsignals (27) ist, $S_I(t_2)$ die erste Komponente des zweiten Antwortsignals (28) ist, und $S_Q(t_2)$ die zweite Komponente des zweiten Antwortsignals (28) ist.

**7.** Der Leser gemäß Anspruch 5, wobei der Leser weiterhin gestaltet ist, um zumindest eine von den ersten oder zweiten Komponenten des ersten oder des zweiten Antwortsignals (27, 28) zu mitteln, und/oder wobei das erste und das zweite Antwortsignal (27, 28) auf dem Trägersignal basierend auf einer Null-Zwischenfrequenz moduliert sind.

**Revendications**

**1.** Procédé de classification d'un transpondeur et/ou de signaux qui proviennent d'un transpondeur, comprenant les étapes qui consistent à :

envoyer à partir d'un lecteur (20) un premier signal (25) vers le transpondeur (1);
recevoir au niveau du lecteur (20), en réponse au premier signal (25), un premier signal de réponse (27) émis par le transpondeur (1);
envoyer à partir du lecteur (20) un deuxième signal (26) vers le transpondeur (1) en réponse au premier signal de réponse (27);
recevoir au niveau du lecteur (20), en réponse au deuxième signal (26), un deuxième signal de réponse (28) émis par le transpondeur (1);
démoduler les premier et deuxième signaux de réponse (27, 28) au niveau du lecteur (20) en utilisant un schéma avec modulation d'amplitude en quadrature, de telle manière que chacun des premier et deuxième signaux de réponse démodulés comprend des première et deuxième composantes qui sont orthogonales l'une à l'autre; et
déterminer la vitesse (*v*) à laquelle le transpondeur se déplace;
le procédé étant **caractérisé en ce que** l'étape de détermination de la vitesse (*v*) inclut l'estimation du décalage de phase (φ) entre les deux signaux de réponse (27, 28) et de l'intervalle de temps entre la réception des premier et deuxième signaux de réponse (27, 28);

et **en ce que** le procédé comprend en outre l'étape de :

classification du transpondeur (1) et/ou de signaux provenant du transpondeur (1) comme valide(s) ou non valide(s) en réponse à la vitesse (*v*) déterminée.

**2.** Procédé selon la revendication 1, dans lequel l'étape de classification comprend :

la classification du transpondeur (1) et/ou de signaux (28) provenant du transpondeur (1) comme valide(s) si la vitesse (*v*) du transpondeur (1) est au-dessus d'une première vitesse de référence et/ou au-dessous d'une deuxième vitesse de référence qui est plus grande que la première vitesse de référence.

**3.** Procédé selon la revendication 1, comprenant une détermination de la vitesse (*v*) du transpondeur (1) conformément à l'équation suivante:

$$v = \frac{v_p}{2\omega} \frac{\arctan 2\left(\frac{S_Q(t_2)}{S_I(t_2)}\right) - \arctan 2\left(\frac{S_Q(t_1)}{S_I(t_1)}\right)}{t_2 - t_1}$$

dans laquelle *v* est la vitesse (*v*) du transpondeur (1), ω est la fréquence porteuse angulaire d'un signal de porteuse pour les premier et deuxième signaux de réponse (27, 28), $v_p$ est la vitesse de propagation du signal de porteuse, $t_2$ - $t_1$ est l'intervalle de temps entre la réception des premier et deuxième signaux de réponse (27, 28), $S_I(t_1)$ est la première composante du premier signal de réponse (27), $S_Q(t_1)$ est la deuxième composante du premier signal de réponse (27), $S_I(t_2)$ est la première composante du deuxième signal de réponse (28), et $S_Q(t_2)$ est la deuxième composante du deuxième signal de réponse (28).

**4.** Procédé selon la revendication 1, dans lequel, pour au moins l'une de la première ou de la deuxième composante du premier ou du deuxième signal de réponse (27, 28) une moyenne dans le temps est effectuée, et/ou la modulation des premier et deuxième signaux de réponse (27, 28) est effectuée sur la base d'une fréquence intermédiaire nulle.

**5.** Lecteur, comprenant:

un émetteur (23) configuré pour générer et envoyer des premier et deuxième signaux (25, 26) vers un transpondeur (1), et un récepteur (24) configuré pour recevoir un premier signal de réponse (27) en provenance du transpondeur (1) en réponse au premier signal (25) et pour recevoir un deuxième signal de réponse (28) de la part du transpondeur (1) en réponse au deuxième signal (26), dans lequel le lecteur (20) est configuré pour déterminer la vitesse (*v*) du transpondeur (1), et dans lequel le lecteur (20) est configuré pour démoduler les premier et deuxième signaux de réponse (27, 28) en utilisant un schéma avec modulation d'amplitude en quadrature, de telle manière que chacun des premier et deuxième signaux de réponse démodulés comprend des première et deuxième composantes qui sont orthogonales l'une à l'autre,
**caractérisé en ce que** le lecteur (20) est configuré pour déterminer la vitesse (*v*) du transpondeur au moyen de l'estimation du décalage de phase (φ) entre les deux signaux de réponse (27, 28) et de l'intervalle de temps entre les premier et deuxième signaux de réponse (27, 28) reçus.

**6.** Lecteur selon la revendication 5, configuré en outre afin de déterminer la vitesse (*v*) du transpondeur (1) conformément à l'équation suivante :

$$v = \frac{v_p}{2\omega} \frac{\arctan 2\left(\frac{S_Q(t_2)}{S_I(t_2)}\right) - \arctan 2\left(\frac{S_Q(t_1)}{S_I(t_1)}\right)}{t_2 - t_1}$$

dans laquelle *v* est la vitesse (*v*) du transpondeur (1), ω est la fréquence porteuse angulaire d'un signal de porteuse pour les premier et deuxième signaux de réponse (27, 28), $v_p$ est la vitesse de propagation du signal de porteuse, $t_2$ - $t_1$ est l'intervalle de temps entre la réception des premier et deuxième signaux de réponse (27, 28), $S_I(t_1)$ est la première composante du premier signal de réponse (27), $S_Q(t_1)$ est la deuxième composante du premier signal de réponse (27), $S_I(t_2)$ est la première composante du deuxième signal de réponse (28), et $S_Q(t_2)$ est la deuxième composante du deuxième signal de réponse (28).

**7.** Lecteur selon la revendication 5, configuré en outre pour effectuer la moyenne d'au moins l'une de la première ou de la deuxième composante du premier ou du deuxième signal de réponse (27, 28) et/ou dans lequel les premier et deuxième signaux de réponse (27, 28) sont modulés sur le signal de porteuse sur la base d'une fréquence intermédiaire nulle.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0853245 A2

- US 5227803 A